# EUROPÄISCHE PATENTSCHRIFT

(11) **EP 4 244 515 B1**
(45) Veröffentlichungstag und Bekanntmachung des Hinweises auf die Patenterteilung: **08.04.2026**
(21) Anmeldenummer: 21801513.9
(22) Anmeldetag: 27.10.2021
(51) Int. Cl.: F16L 25/00

(54) **VERBINDUNGSVORRICHTUNG FÜR EIN UMFANGSGERIPPTES ROHR**
CONNECTING DEVICE FOR A TUBE WITH CIRCUMFERENTIAL RIBS
DISPOSITIF DE RACCORDEMENT POUR UN TUYAU À NERVURES CIRCONFÉRENTIELLES

(30) Priorität: 10.11.2020 EP 20206703
(43) Veröffentlichungstag der Anmeldung: 20.09.2023
(73) Patentinhaber: Viessmann Holding International GmbH, 35108 Allendorf (Eder) (DE)
(72) Erfinder: IRANYI, Daniel, 6312 Steinhausen (CH); SCHNELLER, Reto, 08005 Barcelona (ES); WERNER, Uwe, 8825 Hütten (CH)
(74) Vertreter: Clerc, Natalia
(86) Internationale Anmeldenummer: PCT/EP2021/079832
(87) Internationale Veröffentlichungsnummer: WO 2022/101016

(56) Entgegenhaltungen:
- EP-A2- 0 915 282
- EP-A2- 0 939 265
- DE-A1- 102012 222 623
- US-A- 4 423 891
- US-A- 5 725 258
- US-A- 5 857 716

## Beschreibung

### TECHNISCHES GEBIET

Die vorliegende Erfindung betrifft eine Verbindungsvorrichtung für ein umfangsgeripptes Rohr, insbesondere zur Verbindung oder zum Anschliessen von Lüftungsrohren.

### STAND DER TECHNIK

Umfangsgerippe Rohre, insbesondere Wellrohre, werden beispielsweise als Schutzrohre für Kabel oder Rohre mit geringeren Durchmessern verwendet oder sie dienen als Transporteur für Flüssigkeiten und Gase. Sie werden insbesondere in der Lüftungstechnik wie beispielsweise in Lüftungsanlagen von Gebäuden, eingesetzt.

Insbesondere in der Lüftungstechnik ist es relevant, dass die Rohrverbindungen genügend dicht sind, damit der Energiebedarf des Lüftungsgeräts durch Leckagen nicht erhöht wird und damit Pfeifgeräusche vermieden werden. Zudem darf beim Vergiessen des Betons auf der Baustelle kein Betonwasser in diese Lüftungsrohre gelangen. Dies ist auf der Baustelle eher gewährleistet, wenn die Rohrverbindungen Kräften, insbesondere Zugkräften, widerstehen können, so dass in der Bauphase bereits zusammengefügte Verbindungen nicht derart gelöst werden können, dass sie wieder undicht werden.

Der Begriff "Wellrohr" umfasst in diesem Text insbesondere Metallschläuche und Kunststoffschläuche. Derartige Kunststoffschläuche werden in der Fachwelt teilweise auch als "Wellschläuche" bezeichnet. Die Umfangsrippen sind je nach Ausführungsform unterschiedlich geformt. Vorzugsweise sind sie als einzelne, vorzugsweise gleichabständige Rippen ausgebildet oder sie bilden eine zylindrische Spirale. Der in diesem Text verwendete Begriff "umfanggeripptes Rohr" bezieht sich auf ein derartiges Wellrohr und auch auf Rohre, die auf ihrer Aussenseite andere Arten von Rippen mit Wellentälern zwischen einzelnen Rippen aufweisen.

Zur Verbindung zweier Rohre oder zur Verbindung eines Rohrs mit einem Anschlussstück werden Verbindungsvorrichtungen benötigt, die vorzugsweise eine einfache, schnelle und sichere Verbindung ermöglichen.

DE 39 03 353 A1 offenbart eine Anschlussarmatur für Wellrohre mit einer Hülse zur Aufnahme eines Endes des Wellrohrs und mit einer auslenkbaren, sich in axialer Richtung der Armatur erstreckenden Zunge, die in ein Wellental des Wellrohrs eingreift.

DE 94 00 905.8 U1 offenbart eine Steckschnellkupplungs-Vorrichtung für Wellenschläuche, die als Schutzschläuche von elektrischen Leitungen dienen. Die Vorrichtung weist eine in Richtung zur Längsachse geneigt angeordnete, elastisch verformbare Rasteinheit auf. Diese Verbindung lässt sich mittels einer zwischen Wellrohr und Rasteinheit einführbare Öffnungseinheit wieder lösen.

WO 02/02983 beschreibt eine Anschlussarmatur für Wellrohre mit einer Haltehülse, in die das Rohr einsteckbar ist, und mit einem Haltering, der zuerst beim Einschieben des Rohrs in radialer Richtung elastisch ausgeweitet wird und anschliessend in ein Wellental des Rohrs einrastet.

DE 202 10 654 U1 zeigt eine Hülse zwischen einem Rohr und einem Anschlussstück, wobei die Hülse in ein Wellental des Rohrs eingreift und mit dem Anschlussstück verbunden ist oder ebenfalls in eine dortige Nut eingreift. Im Bereich der Hülse ist mindestens ein Dichtungsring in einem weiteren Wellental des Rohrs angeordnet.

EP 0 086 900 A1 offenbart einen Anschlussnippel für umfangsgerippte Isolierrohre, der einen Dichtungsring, eine Wandausnehmung und eine Sicherungszunge mit nach innen ragenden Querrippen aufweist. Beim Einstecken des Isolierrohrs in den Anschlussnippel wird der Dichtungsring in axialer Richtung zusammengedrückt, bis die Querrippen mit zwei Wellentälern des Isolierrohrs radial fluchten. Die Sicherungszunge lässt sich dann durch Fingerdruck in die Wandausnehmung einrasten, wodurch das Isolierrohr im Nippel fixiert gehalten ist.

Diese Verbindungsvorrichtungen weisen teilweise keine Dichtung auf, so dass sie nicht für Lüftungsrohre eingesetzt werden können. Teilweise sind sie relativ komplex aufgebaut oder nicht einfach zu handhaben, wodurch sie für die Verwendung auf einer Baustelle schlecht geeignet sind. Des Weiteren bieten sie teilweise kaum eine genügende Auszugssicherung.

DE 10 2012 222623 A1 offenbart einen Rohrverbinder mit einer einzigen Klammer, die sich über die Mittelebene des Grundkörpers erstreckt. US 5 725 258 A zeigt einen Rohrverbinder mit einer Doppelklammer, die einem Grundkörper vorsteht.

### DARSTELLUNG DER ERFINDUNG

Es ist deshalb eine Aufgabe der Erfindung, eine Verbindungsvorrichtung zu schaffen, die die oben genannten Nachteile behebt.

Diese Aufgabe löst eine Verbindungsvorrichtung mit den Merkmalen des Patentanspruchs 1.

Die erfindungsgemässe Verbindungsvorrichtung für ein umfanggeripptes Rohr weist eine Rohraufnahme mit einer Aufnahmeöffnung zur Aufnahme eines Endes des Rohrs und mindestens ein Einrastelement zur Fixierung des Rohrs in der Rohraufnahme auf. Die Rohraufnahme weist eine Längsmittelebene auf, welche die Aufnahmeöffnung durchsetzt. Das Einrastelement weist eine erste Stelle auf, die eine Bewegung mindestens eines Teils des Einrastelements relativ zur Rohraufnahme erlaubt, und eine zweite Stelle, die zum Eingriff in ein Wellental des umfanggerippten Rohrs ausgebildet ist. Mindestens bei eingeführtem und fixiertem Rohr liegt die erste Stelle näher an der Längsmittelebene als die zweite Stelle.

Das Einrastelement ist vorzugsweise an ihrer ersten Stelle mit der Rohraufnahme verbunden oder an dieser Stelle in oder an der Rohraunahme gehalten bzw. gelagert. In anderen Ausführungsformen ist diese erste Stelle jedoch getrennt von derjenigen Stelle, an der das Einrastelement mit der Rohraufnahme verbunden oder in bzw. an ihr gehalten oder gelagert ist.

Die Bewegung ist vorzugsweise ein Schwenken. Andere Arten von Bewegungen, beispielsweise eine Verschiebung oder eine Kombination einer Verschiebung mit einer Schwenkung sind ebenfalls möglich.

Die erste Stelle definiert vorzugsweise einen Schwenkpunkt oder eine Schwenkachse des Einrastelements. Die Schwenkbarkeit umfasst je nach Ausführungsform vorzugsweise einige Winkelgrade oder sie entspricht lediglich einer geringen federnden Bewegung des schwenkbaren Teils des Einrastelements. Die Längsmittelachse der Vorrichtung verläuft vorzugsweise in der Längsmittelebene.

In bevorzugten Ausführungsformen greift das Einrastelement in genau ein Wellental ein. In anderen Ausführungsformen ist das Einrastelement derart ausgebildet, dass es in zwei oder mehr Wellentäler eingreift. Das Eingreifen erfolgt je nach Ausführungsform gleichzeitig oder nacheinander.

Diese erfindungsgemässe Anordnung der ersten und zweiten Stelle verstärkt die Haltekräfte, wenn eine Zugkraft am Wellrohr anliegt. Die Auszugssicherung ist erhöht. Ferner ist aufgrund der Selbstverstärkung der Haltekräfte keine weitere Sicherung des Einrastelements notwendig. Auch dies vereinfacht die Vorrichtung und erleichtert die Montage.

Zudem ermöglicht diese Anordnung eine einfache, robuste und kostengünstige Ausgestaltung der Verbindungsvorrichtung. Es sind keine komplexen Vertiefungen oder einstückig angeformte Sicherungszungen notwendig.

Die Anordnung ermöglicht auch eine einfache Montage des Rohrs und erleichtert somit die Handhabung. Es lassen sich Ausführungsformen ausbilden, bei denen das Rohr lediglich eingesteckt werden muss und automatisch vom Einrastelement erfasst und fixiert wird, ohne dass Sicherungszungen oder andere Fixierungsmittel von Hand festgedrückt werden müssen. Die Qualitätssicherung auf der Baustelle ist somit erhöht.

Die Qualitätssicherung bei der Montage lässt sich zudem erhöhen, wenn eine optische Anzeige vorhanden ist, die es erlaubt zu überprüfen, ob das Rohr korrekt in die Rohraufnahme eingeführt und fixiert ist und/oder ob eine Dichtung zwischen dem Rohr und der Rohraufnahme korrekt erstellt worden ist.

Je nach Ausführungsform und Anwendungsbereich ist nur ein einziges Einrastelement vorhanden. Dieses kann lediglich auf einer Seite oder auf mehreren Seiten des Rohrs eingreifen. In anderen Ausführungsformen sind zwei oder mehr Einrastelemente vorhanden.

Die Rohraufnahme ist vorzugsweise aus Kunststoff gebildet. Ausführungsformen aus Metall oder einem anderen Material sind jedoch auch möglich. Die Form der Aufnahmeöffnung der Rohraufnahme ist der äusseren Form des aufzunehmenden Rohrs angepasst. Insbesondere ist sie kreisförmig, elliptisch oder rechteckig mit gerundeten kurzen Seitenflächen. Die Vorrichtung eignet sich somit insbesondere je nach Form zur Aufnahme von Rundrohren oder Flachrohren.

In einer bevorzugten Ausführungsform weist die zweite Stelle eine Längsausdehnung auf, die parallel zur Längsmittelebene und senkrecht zur Längsrichtung der Rohraufnahme verläuft. Diese Anordnung empfiehlt sich insbesondere bei klammerartigen Einrastelementen.

In einer bevorzugten Ausführungsform ist das Einrastelement eine bügelförmige Klammer mit zwei Seitenschenkeln, einem die zwei Seitenschenkel verbindenden Steg und zwei Befestigungsschenkeln. Die zwei Befestigungsschenkel bilden gemeinsam die erste Stelle und der Steg bildet die zweite Stelle.

Diese bügelförmige Klammer lässt sich kostengünstig herstellen und befestigen. Sie ermöglicht zudem ein automatisches Einrasten in ein Wellental des Rohrs. Die Klammer lässt sich beispielsweise aus Kunststoff oder Metall fertigen. Vorzugsweise ist sie einstückig ausgebildet. Sie ist je nach Ausführungsform ein eigenständiges Bauteil, das lösbar oder fest mit der Rohraufnahme verbunden ist. In anderen Ausführungsformen ist sie einstückig mit der Rohraufnahme ausgebildet.

In einer Ausführungsform enden die zwei Befestigungsschenkel frei und sie bilden in ihrer imaginären Verbindung die erste Stelle.

Eine einzige derartige Klammer reicht aus, um das Rohr zu fixieren. Vorzugsweise sind jedoch zwei Klammern an zwei am Umfang gegenüberliegenden Stellen der Rohraufnahme angeordnet. Sie greifen somit beim Einführen des Rohrs an zwei gegenüberliegenden Stellen in das Wellental ein und sichern so das Rohr von beiden Seiten. Sind die Klammern identisch ausgebildet und auf derselben axialen Höhe der Rohraufnahme angeordnet, so greifen sie in dasselbe Wellental ein. In anderen Ausführungsformen ist eine Klammer länger ausgebildet oder bezüglich der Längsachse der Rohraufnahme höher angeordnet, so dass sie in ein anderes Wellental eingreift. In bevorzugten Ausführungsformen sind diese zwei Klammern zwei voneinander getrennte Bauteile. In anderen Ausführungsformen bilden die zwei Klammer ein gemeinsames, vorzugsweise einstückiges Bauteil.

In bevorzugten Ausführungsformen sind zwei Einrastelemente vorhanden, die an zwei gegenüberliegenden Seiten des Umfangs der Rohraufnahme angeordnet sind. Ein Befestigungsschenkel eines Einrastelements ist mit einem Befestigungsschenkel des anderen Einrastelements über einen Verbindungsschenkel miteinander verbunden, sodass die zwei Einrastelemente ein gemeinsames einstückiges Bauteil ausbilden. Die zwei anderen Befestigungsschenkel der zwei Einrastelemente gehen vorzugsweise in je einen frei endenden Verbindungsschenkel über. Dank der freien Verbindungsschenkel lässt sich das Bauteil, d.h. die doppelseitige Klammer, einfacher auf die oder in die Rohraufnahme montieren.

Vorzugsweise ist das Einrastelement federnd in der Rohraufnahme gehalten. Dadurch schnappt es automatisch in das Wellental ein und lässt sich vorzugsweise auch wieder vom Wellental lösen, damit das Rohr aus der Rohraufnahme wieder herausgezogen werden kann.

In bevorzugten Ausführungsformen überragt das Einrastelement die Rohraufnahme im Bereich der zweiten Stelle. Dadurch ist ein sicheres Eingreifen in das Wellental gewährleistet und die Rohraufnahme lässt sich für die Herstellung mit einfachen Formen ausbilden. Dies reduziert auch die Herstellungskosten. In einer einfachen Ausführungsform ist die Rohraufnahme im Wesentlichen zylinderförmig ausgebildet und sie weist eine einheitliche Länge auf.

In bevorzugten Ausführungsformen weist die Rohraufnahme am Umfang mindestens eine Ausnehmung auf., wobei das Einrastelement mit seiner zweiten Stelle in diese Ausnehmung ragt. Dadurch sind ein oder mehr nach oben ragende Seitenwände vorhanden, welche die zweite Stelle des Einrastelements ausserhalb dessen Bereichs überragen. Diese überragenden Seitenwände bilden Einführhilfen und erhöhen den Schutz des Rohrs im Verbindungsbereich. Die Einführhilfe ist noch erhöht, wenn die oberen Enden der überragenden Seitenwände mit einem nach aussen geneigten Kragen versehen sind oder sich auf andere Art und Weise an ihrem freien Ende nach aussen hin erweitern.

Das klammerartige Einrastelement ist vorzugsweise derart ausgebildet und angeordnet, dass es sich beim Einstecken des Rohrs in die Rohraufnahme leichtgängig öffnet und dass bei Zug auf das eingesteckte Rohr die Selbstverstärkung der Haltekräfte eintritt.

Erfindungsgemäss eine Dichtung vorhanden, die in der Rohraufnahme zur axialen Kontaktierung eines Endes des Rohrs angeordnet ist. Vorzugsweise bildet die Dichtung einen in sich geschlossenen Ring. Die Form des Rings entspricht vorzugsweise der Form des aufzunehmenden Rohrs. Insbesondere ist er kreisförmig, elliptisch oder rechteckig mit gerundeten kurzen Seitenflächen. Die Dichtung besteht vorzugsweise aus einem weichen Material, insbesondere einem Schaumstoff. Geschlossen porige oder teilgeschlossen porige Schaumstoffe sind bevorzugt. Vorzugsweise ist die Dichtung mindestens auf ihrer äusseren Oberfläche mit einer anderen Farbe versehen als die Rohraufnahme. Vorzugsweise ist die Farbe leuchtend, beispielsweise rot, gelb, pink oder orange.

Dank der Dichtung lässt sich die Verbindungsvorrichtung vorzugsweise für Lüftungsrohre verwenden, insbesondere für zentrale oder dezentrale Gebäudelüftungsanlagen.

Die Dichtung ist vorzugsweise beim Einführen des Rohrs in axialer Richtung zusammendrückbar. Die Dichtung ist deshalb vorzugsweise frei in der Rohraufnahme angeordnet, d.h. nicht verklebt oder verschweisst, oder sie ist lediglich an ihrer unteren, der Einführrichtung des Rohrs entgegengesetzten Stirnseite in der Rohraufnahme befestigt, z.B. verklebt, verschweisst oder eingeklemmt. Vorzugsweise liegt die Dichtung an einer Innenwandung der Rohraufnahme an.

Je nach Ausführungsform lässt sich die Dichtung durch das Einrastmittel vor einem Herausfallen beim Transport der Vorrichtung sichern. Dies insbesondere dann, wenn das Einrastmittel als bügelförmige Klammer ausgebildet ist und dies vorzugsweise dann, wenn die Rohraufnahme eine Ausnehmung aufweist, in die die Klammer hineinragt. Die Transportsicherung der Dichtung ermöglich eine bereits werkseitige Kombination von Rohraufnahme und Dichtung. Dadurch ist verhindert, dass das Einsetzen der Dichtung auf der Baustelle vergessen wird oder dass nicht passende Dichtungselemente verwendet werden.

Erfindungsgemäss bildet die Rohraufnahme mindestens einen visuellen Zugang zur Dichtung aus. Dadurch kann vor der vollständigen Montage des Rohrs geprüft werden, ob überhaupt eine Dichtung vorhanden ist. Vorzugsweise ist der visuelle Zugang durch die Ausnehmung gebildet. Ist die Dichtung in einer anderen Farbe als die Rohraufnahme ausgebildet, ist sie sehr einfach und schnell erkennbar.

In bevorzugten Ausführungsformen ist der mindestens eine visuelle Zugang bei korrekt und vollständig eingeführtem und fixiertem Rohr vom Rohr teilweise oder ganz verdeckt. Dadurch lässt sich kontrollieren, ob das Rohr vollständig eingeführt ist und die Dichtung somit gewährleistet ist. Ist das Rohr ungenügend eingeführt oder gesichert, so wäre die Dichtung noch mindestens teilweise sichtbar. In anderen Ausführungsformen verdeckt das eingeführte Rohr die Dichtung nur teilweise, so dass auch ihr Vorhandensein bei eingeführtem Rohr noch erkennbar ist. Die Überprüfung, ob das Rohr trotzdem genügend weit eingeführt ist, lässt sich beispielsweise durch eine zweifarbige Dichtung oder durch Markierungen erreichen. Dieser visuelle Zugang erhöht die Qualitätssicherung auf dem Bau.

In einer Ausführungsform weist die Verbindungsvorrichtung für ein Rohr eine Rohraufnahme mit einer Aufnahmeöffnung zur Aufnahme eines Endes des Rohrs, mindestens ein Fixierungselement zur Fixierung des Rohrs in der Rohraufnahme und eine Dichtung auf. Die Rohraufnahme ermöglicht mindestens eine erste optische Angabe betreffend die Dichtung vor Einführung des Rohrs und die Rohraufnahme ermöglicht eine zweite optische Angabe bei korrekt und vollständig eingeführtem und fixierten Rohr, die sich von der ersten optischen Angabe unterscheidet. Diese Vorrichtung erhöht die Qualitätssicherung beim Verbinden eines Rohrs, insbesondere auf der Baustelle.

Das Rohr ist vorzugsweise ein Wellrohr. Es lassen sich jedoch auch Verbindungsvorrichtungen für andere Rohre, beispielsweise für Rohre mit glatten äusseren Oberflächen ausbilden.

Die optische Angabe kann wie in den obigen Beispielen darin bestehen, dass die Dichtung zuerst sichtbar und anschliessend nur noch teilweise oder gar nicht mehr sichtbar ist. Es lassen sich beispielsweise zwei Fenster oder Ausnehmungen ausbilden, die in Einführrichtung des Rohrs hintereinander angeordnet sind. Vor dem Einführen des Rohrs ist die Dichtung in beiden Fenstern sichtbar, nach dem Einführen des Rohrs ist sie nur noch in einem Fenster sichtbar. Auf diese Weise ist nicht nur eine Kontrolle vorhanden, ob das Rohr korrekt eingeführt worden ist, sondern auch, ob überhaupt eine Dichtung vorhanden ist. In anderen Ausführungsformen zeigt die erste optische Angabe die Dichtung und die zweite optische Angabe die Position des Wellrohrs. Diese optischen Angaben können durch ein einziges Fenster oder durch zwei getrennte Fenster angegeben sein. Unter dem Begriff "Fenster" ist in diesem Text jegliche Ausnehmung, Öffnung oder transparente Fläche zu verstehen, die Einblick in die Verbindungsvorrichtung geben. Das Fenster muss nicht von einem Rahmen umgeben sein.

Die Verbindungsvorrichtung gemäss der Erfindung lässt sich in unterschiedlichen Varianten für unterschiedliche Anwendungsbereiche ausformen. Beispielsweise lässt sie sich zur Verbindung von zwei Rohren ausbilden. Sie lässt sich zur Verbindung eines Rohrs mit einem ein Formstück aufweisendes Rohr oder zur Verbindung eines Rohrs mit einem Verteiler, einem Einlass, einem Auslass, einer Armatur oder mit anderen Elementen einsetzen. Die Verbindung kann geradlinig erfolgen oder die Verbindungsvorrichtung ermöglicht eine Umlenkung und/oder eine Verzweigung der durch das Rohr gebildeten Leitung. Entsprechend ist die Aufnahmeöffnung beispielsweise als Durchführungsöffnung oder als Verzweigung ausgebildet.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine erste perspektivische Darstellung einer erfindungsgemässen Verbindungsvorrichtung gemäss einer ersten Ausführungsform;
- Figur 2: eine zweite perspektivische Darstellung der Verbindungsvorrichtung gemäss Figur 1;
- Figur 3: eine erste Seitenansicht der Verbindungsvorrichtung gemäss Figur 1;
- Figur 4: eine zweite Seitenansicht der Verbindungsvorrichtung gemäss Figur 1;
- Figur 5: eine Seitenansicht der Verbindungsvorrichtung gemäss Figur 1 vor einer Montage eines Wellrohrs;
- Figur 6: eine Seitenansicht der Verbindungsvorrichtung gemäss Figur 1 während der Montage des Wellrohrs;
- Figur 7: eine Seitenansicht der Verbindungsvorrichtung gemäss Figur 1 nach erfolgter Montage des Wellrohrs;
- Figur 8: eine erste perspektivische Darstellung einer erfindungsgemässen Verbindungsvorrichtung gemäss einer zweiten Ausführungsform;
- Figur 9: eine zweite perspektivische Darstellung der Verbindungsvorrichtung gemäss Figur 8;
- Figur 10: eine erste Seitenansicht der Verbindungsvorrichtung gemäss Figur 8;
- Figur 11: eine zweite Seitenansicht der Verbindungsvorrichtung gemäss Figur 8;
- Figur 12: eine Seitenansicht der Verbindungsvorrichtung gemäss Figur 8 vor einer Montage eines Wellrohrs;
- Figur 13: eine Seitenansicht der Verbindungsvorrichtung gemäss Figur 8 während der Montage des Wellrohrs;
- Figur 14: eine Seitenansicht der Verbindungsvorrichtung gemäss Figur 8 nach erfolgter Montage des Wellrohrs;
- Figur 15: eine perspektivische Darstellung zweier Einrastelemente der erfindungsgemässen Verbindungsvorrichtung in einer ersten Ausführungsform;
- Figur 16: eine perspektivische Darstellung eines Einrastelements der erfindungsgemässen Verbindungsvorrichtung in einer zweiten Ausführungsform;
- Figur 17: eine perspektivische Darstellung eines Einrastelements der erfindungsgemässen Verbindungsvorrichtung in einer dritten Ausführungsform und
- Figur 18: eine perspektivische Darstellung eines Einrastelements der erfindungsgemässen Verbindungsvorrichtung in einer vierten Ausführungsform. BESCHREIBUNG BEVORZUGTER AUSFÜHRUNGSFORMEN

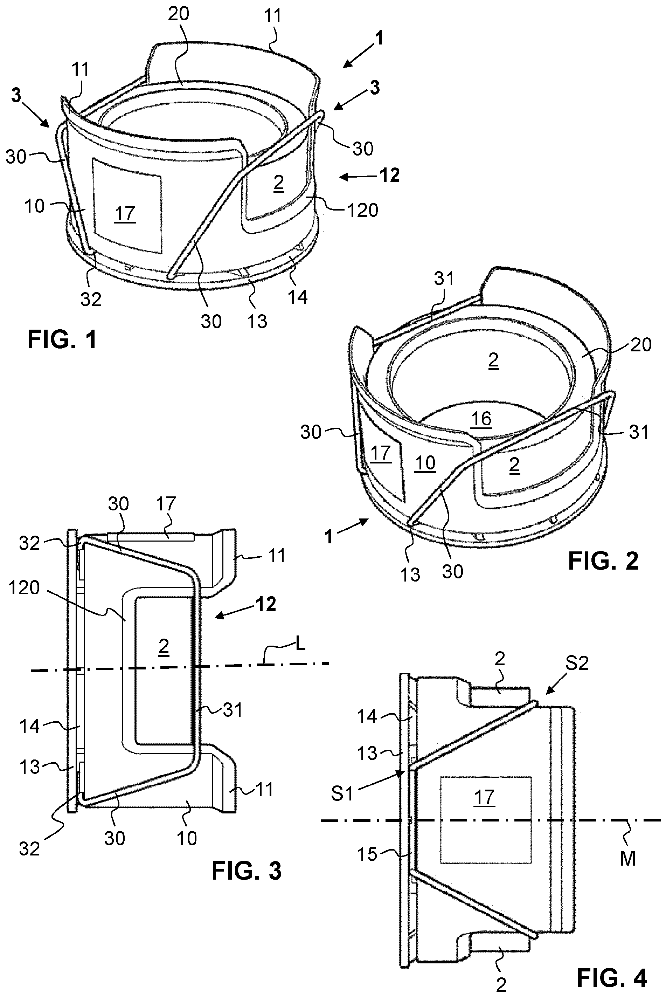

In den Figuren 1 bis 7 ist ein erstes Ausführungsbeispiel der erfindungsgemässen Verbindungsvorrichtung dargestellt. Sie weist eine Rohraufnahme 1 auf, die vorzugsweise aus Kunststoff ausgebildet ist. Die Rohraufnahme 1 weist einen im Wesentlichen zylinderförmigen Grundkörper 10 auf, der eine Aufnahmeöffnung, hier eine Durchgangsöffnung 16, umschliesst. In diesem Beispiel ist der Grundkörper 10 im wesentlichen kreiszylinderförmig. Das aufzunehmende Wellrohr 4 ist hier ein Rundrohr.

Der Grundkörper 10 weist an seinem Umfang mindestens eine, hier zwei Ausnehmungen 12 auf. Die zwei Ausnehmungen 12 sind von Wandung flankiert, die dadurch erhöhte Seitenwände ausbildet. Die erhöhten Seitenwände gehen in einen nach aussen geneigten Kragen 11 über, der eine Einführhilfe für das einzuführende Wellrohr 4 bildet.

Am gegenüberliegenden Ende der Rohraufnahme 1 ist ein Boden 13 angeordnet, der sich vom Grundköper 10 durch eine teilweise oder vollständig umlaufende Nut 14 abgrenzt. Je nachdem, für welchen Einsatzbereich die Verbindungsvorrichtung geplant ist, ist die Vorrichtung mit weiteren Elementen versehen. Dient sie beispielsweise zur Verbindung zweier Rohre, so ist der Boden 13 mit einer ähnlich oder gleich ausgebildeten zweiten Rohraufnahme verbunden, die ein zweites Rohr aufnehmen kann. Die gemeinsame Durchführungsöffnung 16 ist je nach Art der Verbindung geradlinig, abgewinkelt oder gebogen. Auch lässt sich zwischen dem Boden 13 und der zweiten Rohraufnahme ein Verteilelement anordnen, so dass zwei oder mehr Leitungen abgehen und somit zwei bzw. mehr weitere Rohraufnahmen mit der ersten Rohraufnahme in einem gemeinsamen Bauteil ausgebildet sind. Des Weiteren lässt sich der Boden mit einem Einlass, einem Auslass oder einer Armatur fest verbinden oder lösbar an diesen befestigen.

In der Rohraufnahme 1 ist eine Dichtung 2 angeordnet. Sie ist hohlzylinderförmig ausgebildet und liegt vorzugsweise auf einem unteren, durch den Boden 13 gebildeten Rand auf. Vorzugsweise liegt die Dichtung 2 an der Innenwandung der Durchführungsöffnung 16 an, ist jedoch vorzugsweise mindestens mit ihrem äusseren Mantel nicht mit der Rohraufnahme 1 fest verbunden. Die Dichtung 2 weist eine nach oben gerichtete plane Stirnfläche 20 auf. Die Dichtung 2 überragt den unteren Rand 120 der Ausnehmung 12, ist jedoch vorzugsweise weniger hoch als die zwei überragenden Seitenflächen mit dem Kragen 11. Die Rohraufnahme 1 ist vorzugsweise mit einem Typenschild 17 oder einer anderer Art Beschriftung versehen.

Die Dichtung 2 ist vorzugsweise aus einem weichen, zusammendrückbaren Material, insbesondere aus einem Schaumstoff gefertigt. Sie weist vorzugsweise eine andere Farbe auf als die Rohraufnahme 1.

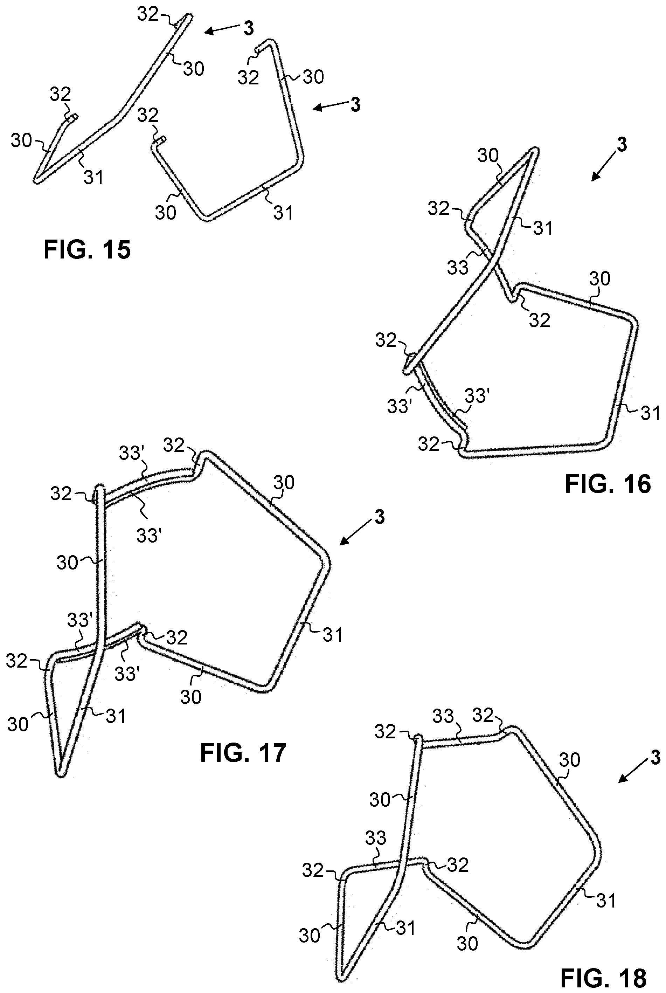

Die erfindungsgemässe Verbindungsvorrichtung weist mindestens ein Einrastelement, hier in Form einer bügelförmigen Klammer 3, auf. In diesem Beispiel sind zwei Klammern 3 vorhanden, die in Figur 15 dargestellt sind. Sie sind vorzugsweise aus Metall oder Kunststoff gefertigt. Vorzugsweise sind sie einstückig ausgebildet und noch bevorzugter in Form eines gebogenen Stabs. Jede Klammer 3 weist zwei Seitenschenkel 30, einen diesen Seitenschenkel 30 verbindenden Steg 31 und zwei frei endende Befestigungsschenkel 32 auf. Die Klammer 3 bildet in diesem Beispiel eine plane Ebene aus, wobei die Befestigungsschenkel 32 vorzugsweise parallel zum Steg 31 verlaufen. Alternative Ausbildungen sind jedoch möglich. Vorzugweise sind diese einzelnen Abschnitte der Klammer 3 geradlinig ausgebildet. In anderen Ausführungsformen sind sie gebogen. Insbesondere sind die Seitenschenkel 30 derart gebogen, dass sie sich an die Aussenkontur der Rohraufnahme 1 anschmiegen. Alternativ oder zusätzlich ist der Steg 31 in Montagerichtung des Rohrs gebogen, um bei Lasteinleitung in das Rohr bevorzugt mehr Last in Richtung der Längsmittelachse des Rohrs abzusetzen als am Rand des Rohrs. Zudem wirkt eine derartige Ausbildung einem Aufbiegen des Stegs 31 entgegen.

Die Klammern 3 sind mit der Rohraufnahme 1 verbunden. Sie sind je nach Ausführungsform in einer Bügelaufnahme 15 schwenkbar gehalten, federnd gehalten, fest verbunden oder einstückig an der Rohraufnahme 1 angeformt. Im Falle einer festen Verbindung oder einer einstückigen Anformung ist der Bügel derart ausgebildet, dass er eine zumindest geringe flexible Schwenkbewegung der Seitenschenkel 30 relativ zu den fix gehaltenen Befestigungsschenkeln 32 erlaubt. Der Steg 31 und die Seitenschenkel 30 bilden somit den an der Stelle S1 schwenkbaren Teil des Einrastelements.

In diesem Beispiel sind die Befestigungsschenkel 32 in der Nut 14 gehalten, wie in den Figuren 1 bis 4 gut erkennbar ist. Sie sind je nach Ausführungsform angeklebt, verschweisst, eingerastet, eingesteckt oder schwenkbar und/oder federnd in einer entsprechenden Lagerung gehalten.

Jede Klammer 3 ist derart mit der Rohraufnahme 1 verbunden, dass der Steg 31 in der Aufnahme zu liegen kommt. Dabei ragt er in den imaginären äusseren Umfang der Rohraufnahme 1 hinein. Der Steg 31 überragt vorzugsweise die obere Stirnfläche 20 der Dichtung 2.

Wie insbesondere in den Figuren 1 und 4 gut erkennbar ist, befindet sich die Stelle, an der die Klammer 3 mit der Rohraufnahme 1 verbunden ist, und um die somit die Seitenschenkel 30 schwenkbar sind, näher an einer Längsmittelebene M der Rohraufnahme 1 als der Steg 31. In Figur 4 verläuft die Längsmittelebene M senkrecht zur Zeichnungsebene. In Figur 3 liegt sie in der Zeichnungsebene. In Figur 3 ist die Längsachse L dargestellt. Diese Verbindungsstelle ist hier als erste Stelle S1 bezeichnet. Der Steg 31 definiert eine zweite Stelle S2, deren Bedeutung nachfolgend beschrieben ist. Sind zwei Klammern 3 oder ist eine doppelseitige Klammer mit zwei Stegen 31 vorhanden, so befindet sich die Längsmittelebene M vorzugsweise mittig zwischen den zwei Klammern 3 bzw. zwischen den zwei Stegen 31. Vorzugsweise beträgt der Winkel zwischen der Längsmittelebene M und den Seitenschenkeln 30 zwischen 20° und 45°, insbesondere annähernd 35°.

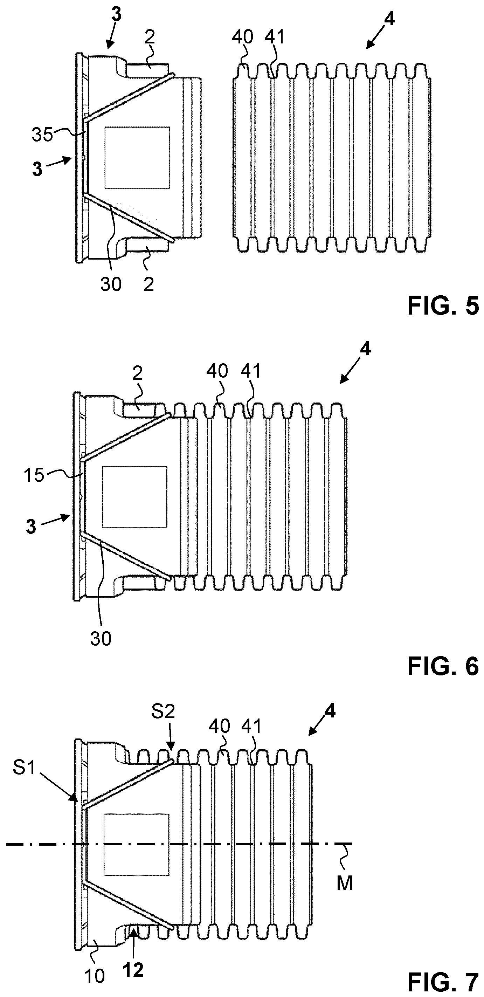

In den Figuren 5 bis 7 ist dargestellt, wie sich das Wellrohr 4 mit dieser erfindungsgemässen Verbindungsvorrichtung verbinden lässt. In Figur 5 ist der Zustand vor der Montage dargestellt. Die Dichtung 2 ist gut erkennbar. Das Wellrohr 4 weist Rippen 40 und Wellentäler 41 auf.

In Figur 6 wurde nun das Wellrohr 4 in die Rohraufnahme 1 und die Dichtung 2 eingesteckt. Die Klammer 3 ist in ihrer Lage zur Längsmittelachse L und zur Längsmittelebene M vorzugsweise begrenzt, indem sie an den Seitenwandungen der Ausnehmung 12, d.h. des Fensters, anliegt. Somit ist sichergestellt, dass die Klammer 3 stets ausserhalb des Innendurchmessers des Rohres 4 liegt und die Rippen 40 die Klammer 3 sicher aufdrücken können. Beim weiteren Hineindrücken des Wellrohrs 4 liegt die Stirnseite des Wellrohrs 4 oder zumindest die vorderste Rippe 40 auf der oberen Stirnfläche 20 der Dichtung auf. Diese Stirnseite ist üblicherweise eine Schnittfläche. Die Schnittfläche kann unterschiedlich ausgebildet sein. Im Allgemeinen ist sie nicht plan und oft ist sie auch nicht rechtwinklig zur Längsachse des Rohrs. Die Dichtung 20 wird beim weiteren Hineindrücken des Wellrohrs 4 in axialer Richtung L zusammengedrückt. Die Klammer 3 wird durch die Rippen 40 nach aussen gedrückt, d.h. die Seitenschenkel 30 schwenken um die Anlenkstelle, d.h. um die erste Stelle S1, und die Rippen 40 gleiten am Steg 31 entlang nach unten Richtung Boden 13, bis sich das Rohr 4 aufgrund der maximalen Pressung der Dichtung 2 oder eines im Innern der Rohraufnahme 1 vorgesehenen Anschlags nicht mehr weiter hineindrücken lässt. Vorzugsweise ist in dieser Endposition die Dichtung 2 so weit zusammengedrückt, dass sie nicht mehr in der Ausnehmung 12 sichtbar ist. Die Ausnehmung bildet somit ein Fenster bzw. eine optische Anzeige oder einen visuellen Zugang für die korrekte Verbindung von Verbindungsvorrichtung und Wellrohr 4. In dieser Position befindet sich der Steg 31 und somit die zweite Stelle S2 in einem Wellental 41 und hält das Rohr 4 fixiert in dieser Position. Das Rohr 4 lässt sich nicht mehr herausziehen. Die spezielle Anordnung der ersten und zweiten Stelle S2 in Bezug auf die Längsmittelachse M verstärkt vielmehr die Haltewirkung bei Zug auf das Rohr 4. Die Klammer 3 lässt sich jedoch mit einem einfachen Werkzeug, beispielsweise mit einem Schraubendreher oder einem Stab, auf einfache Art und Weise aus dem Wellental 41 lösen und das Rohr kann nochmals entfernt werden.

Sollte der Steg 31 beim Einführen des Rohrs 4 nicht in einem Wellental 41 zu liegen kommen, drückt die Dichtung 2, nach Freigabe des Rohres durch den Monteur, das Rohr 4 entgegen der Montagerichtung soweit, bis der Steg 31 im nächsten Wellental 41 eingreifen kann. Vorzugsweise ist die Vorrichtung derart ausgebildet, dass die Dichtung weiterhin gewährleistet ist und die Dichtung 2 noch nicht in der Ausnehmung 12, d.h. im Fenster, sichtbar ist. Die Montage erfüllt somit nach wie vor die Vorgaben und ist entsprechend korrekt.

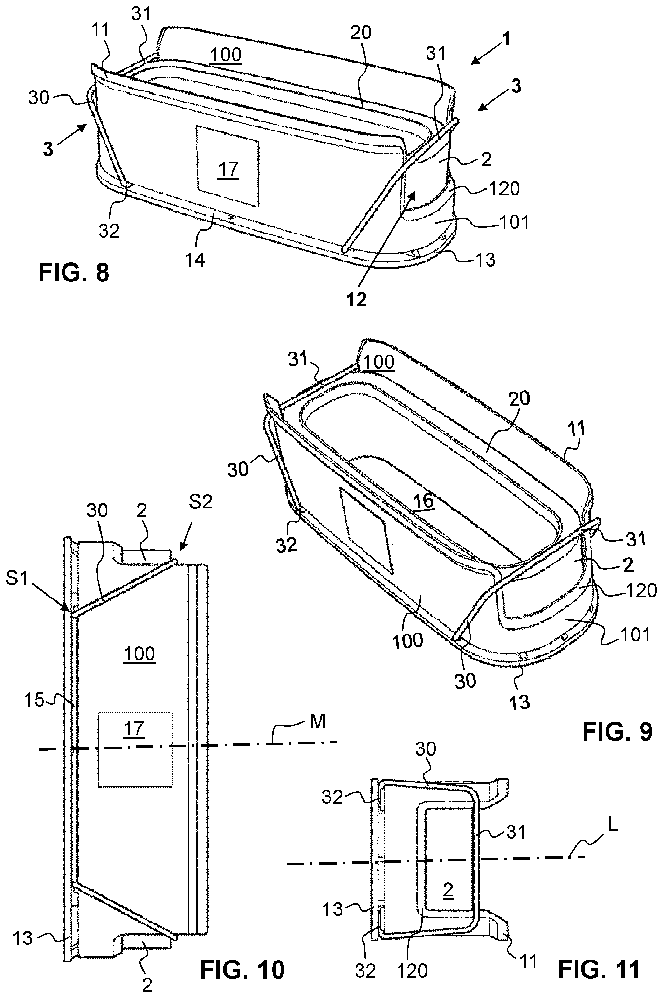

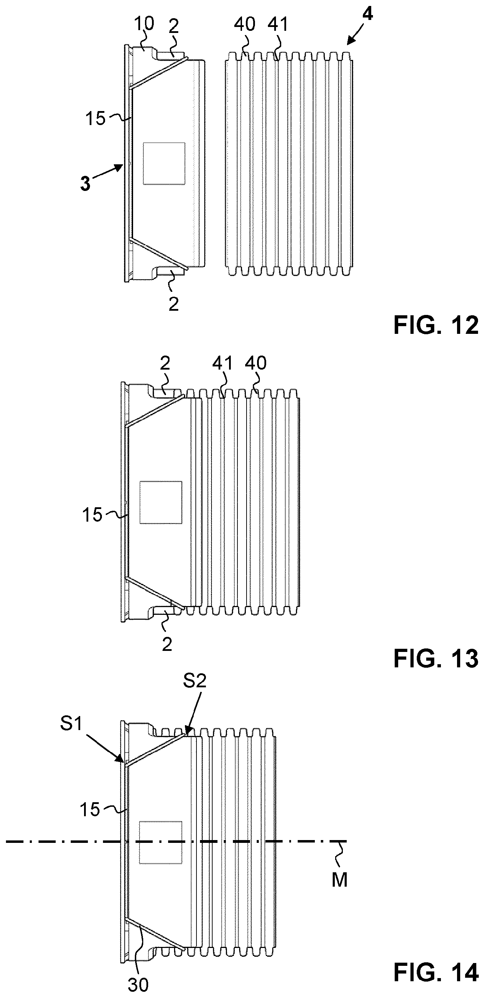

In den Figuren 8 bis 14 ist eine zweite Ausführungsform dargestellt. Gleiche Teile sind mit gleichen Bezugszeichen versehen und werden nicht nochmals im Detail beschrieben. Diese Verbindungsvorrichtung eignet sich zur Verbindung mit einem flachen Wellrohr 4. Der Grundkörper 10 ist wiederum hohlzylinderförmig ausgebildet. Er weist nun jedoch eine längliche Grundform auf mit zwei parallel zueinander angeordneten planen Seitenwänden 100 und zwei einander gegenüberliegenden nach aussen gebogenen Seitenwänden 101. Je eine Klammer 3 ist im Bereich einer der zwei gebogenen Seitenwände 101 angeordnet. Die zwei gebogenen Seitenwände 101 weisen entsprechende Ausnehmungen 12 auf, die wiederum von der Dichtung 2 überragt werden. Auch diese Ausnehmungen 12 dienen als visueller Zugang für die Überwachung des korrekten Zusammenfügens. Der Steg 31 der Klammer 3 ragt wiederum in diese Ausnehmungen 12 hinein und überragt vorzugsweise die Dichtung 2. Auch hier befindet sich der Steg 31 jedoch vorzugsweise unterhalb des obersten Rands der Rohraufnahme 1. In Figur 10 verläuft die Längsmittelebene M senkrecht zur Zeichnungsebene. In Figur 11 liegt sie in der Zeichnungsebene. In Figur 11 ist die Längsachse L dargestellt.

In anderen Ausführungsformen, unabhängig von der Form der Rohraufnahme, überragt der Steg 31 den obersten Rand der Rohraufnahme 1. Beispielsweise ist der Steg 31 nach innen gebogen, um in das Wellental 41 des eingeführten Rohrs 4 eingreifen zu können.

Die Klammer 3 kann unterschiedlichste Formen aufweisen. Sie kann, wie in den Figuren 16 bis 18 dargestellt ist, beispielsweise auch als Doppelklammer ausgeführt sein. In der Ausführungsform gemäss Figur 16 sind zwei Paare Seitenschenkel 30 mit je einem sie verbindenden Steg 31 vorhanden. Die zwei Paare der Seitenschenkel 30 schliessen vorzugsweise einen Winkel zwischen 40° und 90°, vorzugsweise von annähernd 70° ein. Die an die Seitenschenkel 30 angrenzenden Befestigungsschenkel 32 sind zueinander hin gebogen und verlaufen somit nicht mehr parallel zu den Stegen 31. Alternativ verlaufen sie parallel zu den Stegen 31. Ein freies Ende eines der Befestigungsschenkel 32 des ersten Paars ist mittels eines ersten Verbindungsschenkels 33 mit einem Befestigungsschenkel 32 des zweiten Paars verbunden. An den zwei anderen Befestigungsschenkel 32 der Paare ist ebenfalls je ein zweiter Verbindungsschenkel 33' angeordnet. Diese zweiten Verbindungsschenkel 33' sind jedoch nicht miteinander verbunden, sondern liegen aneinander oder aufeinander an. Dadurch lässt sich die Klammer 13 einfacher in die Nut 14 einschieben und mit der Rohraufnahme 1 verbinden. In Figur 16 sind die Verbindungsschenkel 33, 33' gebogen ausgebildet. Sie können jedoch auch geradlinig ausgebildet sein.

Die gebogene Ausbildung der Verbindungsschenkel 33, 33' und/oder der Seitenschenkel 30, hat den Vorteil, dass die Klammern besser an die Kontur der Rohraufnahme 1 angepasst sind. Dadurch wird weniger Bauraum benötigt und die Last kann besser in die Rohraufnahme 1 eingeleitet werden kann. Die geradlinige Ausbildung der Schenkel weist den Vorteil auf, dass sie zu geringeren Fertigungskosten führt.

In der Ausführungsform gemäss Figur 17 sind auf beiden Seiten Paare von Verbindungsschenkeln 33' vorhanden. Diese können frei zueinander verlaufen, aneinander anliegen oder miteinander fest verbunden sein, beispielsweise verschweisst oder gelötet.

In der Ausführungsform gemäss Figur 18 ist die Doppelklammer aus einer einzigen, in sich geschlossenen, gebogenen Drahtschlaufe gebildet.

Die erfindungsgemässe Verbindungsvorrichtung ermöglicht eine einfache und sichere und vorzugsweise dichte Fixierung eines Rohrs.

### BEZUGSZEICHENLISTE

| | | | |
|---|---|---|---|
| 1 | Rohraufnahme | 3 | Klammer |
| 10 | Grundkörper | 30 | Seitenschenkel |
| 100 | plane Seitenwand | 31 | Steg |
| 101 | gebogene Seitenwand | 32 | Befestigungsschenkel |
| 11 | Kragen | 33 | erster Verbindungsschenkel |
| 12 | Ausnehmung | 33' | zweiter Verbindungsschenkel |
| 120 | unterer Rand | | |
| 13 | Boden | 4 | Wellrohr |
| 14 | Nut | 40 | Rippe |
| 15 | Bügelaufnahme | 41 | Wellental |
| 16 | Durchführungsöffnung | | |
| 17 | Typenschild | L | Längsachse, axiale Richtung |
| | | M | Längsmittelebene |
| 2 | Dichtung | S1 | erste Stelle |
| 20 | obere Stirnfläche | S2 | zweite Stelle |

## Patentansprüche

1. Verbindungsvorrichtung für ein umfanggeripptes Rohr (4), wobei die Verbindungsvorrichtung eine Rohraufnahme (1) mit einer Aufnahmeöffnung zur Aufnahme eines Endes des Rohrs (4) und mindestens ein Einrastelement (3) zur Fixierung des Rohrs (4) in der Rohraufnahme (1) aufweist, wobei die Rohraufnahme (1) eine Längsmittelebene (M) aufweist, welche die Aufnahmeöffnung durchsetzt, wobei das Einrastelement (3) eine erste Stelle (S1) aufweist, die eine Bewegung mindestens eines Teils des Einrastelements relativ zur Rohraufnahme (1) erlaubt, und eine zweite Stelle (S2) aufweist, die zum Eingriff in ein Wellental (41) des umfanggerippten Rohrs (4) ausgebildet ist, wobei mindestens bei eingeführtem und fixiertem Rohr (4) die erste Stelle (S1) näher an der Längsmittelebene (M) liegt als die zweite Stelle (S2), **dadurch gekennzeichnet, dass** eine Dichtung (2) vorhanden ist, die in der Rohraufnahme (1) zur axialen Kontaktierung eines Endes des Rohrs (4) angeordnet ist,
dass die Rohraufnahme mindestens einen visuellen Zugang zur Dichtung (2) ausbildet,
dass mindestens ein Fenster vorhanden ist, das Einblick in die Verbindungsvorrichtung gibt, wobei das mindestens eine Fenster den mindestens einen visuellen Zugang zur Dichtung (2) ausbildet, wobei das mindestens eine Fenster eine Ausnehmung, eine Öffnung oder eine transparente Fläche ist.

2. Verbindungsvorrichtung nach Anspruch 1, wobei die zweite Stelle (S2) eine Längsausdehnung aufweist, die parallel zur Längsmittelebene (M) und senkrecht zur Längsrichtung (L) der Rohraufnahme (1) verläuft.

3. Verbindungsvorrichtung nach einem der Ansprüche 1 oder 2, wobei das Einrastelement eine bügelförmige Klammer (3) ist mit zwei Seitenschenkeln (30), einem die zwei Seitenschenkel (30) verbindenden Steg (31) und zwei Befestigungsschenkel (32), wobei die Befestigungsschenkel (32) gemeinsam die erste Stelle (S1) bilden und der Steg (31) die zweite Stelle (S2) bildet.

4. Verbindungsvorrichtung nach Anspruch 3, wobei die Befestigungsschenkel (32) frei enden.

5. Verbindungsvorrichtung nach Anspruch 3, wobei zwei Klammern (3) vorhanden sind, die an zwei gegenüberliegenden Seiten des Umfangs der Rohraufnahme (1) angeordnet sind und wobei ein Befestigungsschenkel (32) einer der Klammern (3) mit einem Befestigungsschenkel (32) der anderen Klammer (3) über einen Verbindungsschenkel (33) miteinander verbunden ist, sodass die zwei Klammern (3) ein gemeinsames einstückiges Bauteil ausbilden, wobei vorzugsweise die zwei anderen Befestigungsschenkel (32) der zwei Klammern (3) in je einen frei endenden Verbindungsschenkel (33') übergehen.

6. Verbindungsvorrichtung nach einem der Ansprüche 1 bis 5, wobei das Einrastelement (3) federnd in der Rohraufnahme (1) gehalten ist.

7. Verbindungsvorrichtung nach einem der Ansprüche 1 bis 6, wobei das Einrastelement (3) die Rohraufnahme (1) im Bereich der zweiten Stelle (S2) überragt.

8. Verbindungsvorrichtung nach einem der Ansprüche 1 bis 7, wobei die Rohraufnahme (1) an ihrem Umfang mindestens eine Ausnehmung (12) aufweist, und wobei das Einrastelement (3) mit seiner zweiten Stelle (S2) in diese Ausnehmung (12) ragt.

9. Verbindungsvorrichtung nach Anspruch einem der Ansprüche 1 bis 8, wobei die Dichtung (2) beim Einführen des Rohrs (4) in Richtung in axialer Richtung (L) zusammendrückbar ist.

10. Verbindungsvorrichtung einem der Ansprüche 1 bis 9, wobei die Dichtung (2) an einer Innenwandung der Rohraufnahme (1) anliegt.

11. Verbindungsvorrichtung nach Anspruch 8 oder einem der Ansprüche 9 und 10, sofern rückbezogen auf Anspruch 8, wobei der visuelle Zugang durch die Ausnehmung (12) gebildet ist.

12. Verbindungsvorrichtung nach einem der Ansprüche 1 bis 11, wobei der mindestens eine visuelle Zugang bei korrekt und vollständig eingeführtem und fixiertem Rohr (4) vom Rohr (4) teilweise oder ganz verdeckt ist.

13. Verbindungsvorrichtung nach einem der Ansprüche 1 bis 12, wobei die Rohraufnahme (1) mindestens eine erste optische Angabe betreffend die Dichtung (2) vor Einführung des Rohrs (4) ermöglicht und dass die Rohraufnahme (1) eine zweite optische Angabe bei korrekt und vollständig eingeführtem und fixierten Rohr (4) ermöglicht, die sich von der ersten optischen Angabe unterscheidet.

## Claims

1. Connection device for a peripherally ribbed pipe (4), wherein the connection device comprises a pipe receptacle (1) having a receiving opening for receiving an end of the pipe (4) and at least one latching element (3) for fastening the pipe (4) in the pipe receptacle (1), wherein the pipe receptacle (1) has a longitudinal center plane (M) which extends through the receiving opening, wherein the latching element (3) has a first point (S1) which allows movement of at least part of the latching element relative to the pipe receptacle (1), and a second point (S2) which is designed to engage in a corrugation trough (41) of the peripherally ribbed pipe (4), wherein at least when the pipe (4) is inserted and fastened, the first point (S1) lies closer to the longitudinal center plane (M) than the second point (S2), **characterized in that** a seal (2) is present, the seal being arranged in the pipe receptacle (1) for axial contact with one end of the pipe (4),
**in that** the pipe receptacle (1) forms at least one visual access point to the seal (2),
**in that** at least one aperture is present providing a view into the connection device, wherein the at least one aperture forms the at least one visual access point to the seal (2), wherein the at least one aperture is a recess, an opening or a transparent surface.

2. Connection device as claimed in claim 1, wherein the second point (S2) has a longitudinal extent which runs parallel to the longitudinal center plane (M) and perpendicularly to the longitudinal direction (L) of the pipe receptacle (1).

3. Connection device as claimed in one of claims 1 or 2, wherein the latching element is a bow-shaped clamp (3) with two lateral limbs (30), a web (31) connecting the two lateral limbs (30) and two fastening limbs (32), wherein the fastening limbs (32) together form the first point (S1) and the web (31) forms the second point (S2).

4. Connection device as claimed in claim 3, wherein the fastening limbs (32) terminate freely.

5. Connection device as claimed in claim 3, wherein two clamps (3) are present, the two clamps being arranged on two opposing sides of the periphery of the pipe receptacle (1), and wherein one fastening limb (32) of one of the clamps (3) is connected to a fastening limb (32) of the other clamp (3) via a connecting limb (33), such that the two clamps (3) form a common one-piece component, wherein the two other fastening limbs (32) of the two clamps (3) preferably transition into one respective freely terminating connecting limb (33').

6. Connection device as claimed in one of claims 1 to 5, wherein the latching element (3) is retained in a resilient manner in the pipe receptacle (1).

7. Connection device as claimed in one of claims 1 to 6, wherein the latching element (3) protrudes over the pipe receptacle (1) in the region of the second point (S2).

8. Connection device as claimed in one of claims 1 to 7, wherein the pipe receptacle (1) has at least one recess (12) on its periphery and wherein the latching element (3) protrudes with its second point (S2) into this recess (12).

9. Connection device as claimed in one of claims 1 to 8, wherein the seal (2) is able to be compressed in the axial direction (L) when the pipe (4) is inserted.

10. Connection device as claimed in one of claims 1 to 9, wherein the seal (2) bears against an inner wall of the pipe receptacle (1).

11. Connection device as claimed in claim 8 or one of claims 9 and 10, if dependent on claim 8, wherein the visual access point is formed by the recess (12).

12. Connection device as claimed in one of claims 1 to 11, wherein the at least one visual access point is partially or entirely concealed by the pipe (4) when the pipe (4) is correctly and fully inserted and fastened.

13. Connection device as claimed in one of claims 1 to 12, wherein the pipe receptacle (1) permits at least one first visual indication relating to the seal (2) before the pipe (4) is inserted and in that the pipe receptacle (1) permits a second visual indication, which differs from the first visual indication, when the pipe (4) is correctly and fully inserted and fastened.

## Revendications

1. Dispositif de liaison pour un tube nervuré sur la circonférence (4), le dispositif de liaison présentant un réceptacle de tube (1) avec une ouverture de réception pour recevoir une extrémité du tube (4) et au moins un élément d'encliquetage (3) pour fixer le tube (4) dans le réceptacle de tube (1), le réceptacle de tube (1) présentant un plan médian longitudinal (M) qui traverse l'ouverture de réception, l'élément d'encliquetage (3) présentant un premier emplacement (S1) qui permet un mouvement d'au moins une partie de l'élément d'encliquetage par rapport au réceptacle de tube (1), et un deuxième emplacement (S2) réalisé pour s'engager dans un creux (41) du tube nervuré sur la circonférence (4), le premier emplacement (S1) étant plus proche du plan médian longitudinal (M) que le deuxième emplacement (S2) au moins lorsque le tube (4) est inséré et fixé, **caractérisé en ce qu'**un joint d'étanchéité (2) est présent, qui est agencé dans le réceptacle de tube (1) pour entrer en contact axial avec une extrémité du tube (4),
**en ce que** le réceptacle de tube réalise au moins un accès visuel au joint d'étanchéité (2),
**en ce qu'**au moins une fenêtre est présente, qui permet de voir l'intérieur du dispositif de liaison, l'au moins une fenêtre réalisant l'au moins un accès visuel au joint d'étanchéité (2), l'au moins une fenêtre étant un évidement, une ouverture ou une surface transparente.

2. Dispositif de liaison selon la revendication 1, le deuxième emplacement (S2) présentant une extension longitudinale qui s'étend parallèlement au plan médian longitudinal (M) et perpendiculairement à la direction longitudinale (L) du réceptacle de tube (1).

3. Dispositif de liaison selon l'une quelconque des revendications 1 ou 2, l'élément d'encliquetage étant une pince en forme d'étrier (3) avec deux branches latérales (30), une entretoise (31) reliant les deux branches latérales (30) et deux branches de fixation (32), les branches de fixation (32) formant ensemble le premier emplacement (S1) et l'entretoise (31) formant le deuxième emplacement (S2).

4. Dispositif de liaison selon la revendication 3, les branches de fixation (32) se terminant librement.

5. Dispositif de liaison selon la revendication 3, deux pinces (3) étant prévues, qui sont agencées sur deux côtés opposés de la circonférence du réceptacle de tube (1), et une branche de fixation (32) de l'une des pinces (3) étant reliée à une branche de fixation (32) de l'autre pince (3) par l'intermédiaire d'une branche de liaison (33), de telle sorte que les deux pinces (3) réalisent un composant monobloc commun, les deux autres branches de fixation (32) des deux pinces (3) se transformant de préférence chacune en une branche de liaison (33') à extrémité libre.

6. Dispositif de liaison selon l'une quelconque des revendications 1 à 5, l'élément d'encliquetage (3) étant maintenu à ressort dans le réceptacle de tube (1).

7. Dispositif de liaison selon l'une quelconque des revendications 1 à 6, l'élément d'encliquetage (3) dépassant du réceptacle de tube (1) dans la zone du deuxième emplacement (S2).

8. Dispositif de liaison selon l'une quelconque des revendications 1 à 7, le réceptacle de tube (1) présentant au moins un évidement (12) sur sa circonférence, et l'élément d'encliquetage (3) pénétrant par son deuxième emplacement (S2) dans cet évidement (12).

9. Dispositif de liaison selon l'une quelconque des revendications 1 à 8, le joint d'étanchéité (2) pouvant être comprimé dans la direction axiale (L) lors de l'insertion du tube (4).

10. Dispositif de liaison selon l'une quelconque des revendications 1 à 9, le joint d'étanchéité (2) étant en appui contre une paroi intérieure du réceptacle de tube (1).

11. Dispositif de liaison selon la revendication 8 ou l'une quelconque des revendications 9 et 10, dans la mesure où elles se rapportent à la revendication 8, l'accès visuel étant formé par l'évidement (12).

12. Dispositif de liaison selon l'une quelconque des revendications 1 à 11, l'au moins un accès visuel étant partiellement ou totalement recouvert par le tube (4) lorsque le tube (4) est correctement et complètement inséré et fixé.

13. Dispositif de liaison selon l'une quelconque des revendications 1 à 12, le réceptacle de tube (1) permettant au moins une première indication optique concernant le joint d'étanchéité (2) avant l'insertion du tube (4) et le réceptacle de tube (1) permettant une deuxième indication optique lorsque le tube (4) est correctement et complètement inséré et fixé, qui diffère de la première indication optique.
